# EUROPEAN PATENT APPLICATION

(11) **EP 4 797 626 A1**
(43) Date of publication of application: **26.08.2026**
(21) Application number: 25755174.7
(22) Date of filing: 06.02.2025
(51) Int. Cl.: H04L 12/28, H04L 67/52, G01S 19/01, G16Y 10/80, G16Y 40/30

(54) **ELECTRONIC DEVICE AND METHOD FOR CONTROLLING SAME**

(30) Priority: 15.02.2024 KR 20240021703
(71) Applicant: Samsung Electronics Co., Ltd., Suwon-si, Gyeonggi-do 16677 (KR)
(72) Inventor: WOO, Ickhee, Suwon-si, Gyeonggi-do 16677 (KR)
(74) Representative: Appleyard Lees IP LLP
(86) International application number: PCT/KR2025/099328
(87) International publication number: WO 2025/174177

(57) **Abstract**

An electronic device, and a controlling method thereof, including a communicator; and a processor configured to, based on a registration request of a first user, register a preset event and an operation of a first external device corresponding to the registered preset event, based on the registered preset event occurring, identify whether a second user is present in a space where the first external device is located, based on identifying that the second user is present in the space, provide a request to the second user to approve the registered operation; identify whether the registered operation is approved by the second user; and, based on the identifying whether the registered operation is approved by the second user, determine whether to transmit a control signal corresponding to the registered operation to the first external device.

## Description

### [Technical Field]

The present disclosure relates to an electronic device and a controlling method thereof, and more particularly to, an electronic device capable of performing an automated operation for an IoT device and a controlling method thereof.

### [Background Art]

In recent years, technologies related to the Internet of Things (IoT) have been developed rapidly. In particular, recently, beyond manually controlling IoT devices, so-called automation technologies that enable pre-designated devices to perform set operations when certain conditions are detected have been gaining attention.

However, in automation technologies, when multiple users share one IoT device, a major challenge is resolving conflicts between automated operations (automated routines) registered by multiple users.

For example, family members within the same home network often share IoT devices, and are free to set up automations without interference, which often results in certain IoT devices being controlled at the same time. Since members cannot know how each other's automation operations overlap, it is difficult to determine which member should be given control priority.

Nevertheless, the prior art merely performs automated control in response to requested control commands or conditions at any given time without distinguishing, for example, between users. Therefore, it has been pointed out that the prior art has limitations in that automated operations may be performed against the intention of the actual user, and does not effectively resolve the problem of conflicts between automated operations for IoT devices shared by multiple users.

### [Disclosure]

### [Technical Solution]

The present disclosure is to solve the problems of the prior art as described above, and the purpose of the present disclosure is to provide an electronic device capable of preventing conflicts between automated operations for IoT devices and a controlling method thereof.

Aspects of embodiments of the disclosure will be set forth in part in the description which follows and, in part, will be apparent from the description, or may be learned by practice of the presented embodiments.

According to an embodiment of the disclosure, an electronic device includes a communicator; and a processor configured to, based on a registration request of a first user, register a preset event and an operation of a first external device corresponding to the registered preset event, based on the registered preset event occurring, identify whether a second user is present in a space where the first external device is located, based on identifying that the second user is present in the space, provide a request to the second user to approve the registered operation; identify whether the registered operation is approved by the second user; and, based on the identifying whether the registered operation is approved by the second user, determine whether to transmit a control signal corresponding to the registered operation to the first external device.

According to an embodiment of the disclosure, the processor may be configured to, based on a response indicating an approval of the registered operation being received from the second user, or the response to the registered operation not being received from the second user for a preset threshold time, identify the approval of the registered operation by the second user, and, based on the approval of the registered operation being identified, determine to transmit the control signal corresponding to the registered operation to the first external device, and control the communicator to transmit the control signal to the first external device.

According to an embodiment of the disclosure, the processor may be configured to, based on identifying that the second user is not present in the space, control the communicator to transmit the control signal corresponding to the registered operation to the first external device.

According to an embodiment of the disclosure, the processor may be configured to receive status information indicating an operation status of the first external device from the first external device through the communicator, identify whether the first external device is performing the registered operation based on the received status information, based on identifying that the first external device is not performing the registered operation, identify whether the second user is present in the space where the first external device is located, and, based on identifying that the first external device is performing the registered operation, not identify whether the second user is present in the space where the first external device is located.

According to an embodiment of the disclosure, the processor may be configured to receive the registration request from a first user terminal of the first user through the communicator, and, based on identifying that the second user is present in the space, control the communicator to transmit information about the request to approve the registered operation to at least one of a second user terminal of the second user or a second external device located in the space.

According to an embodiment of the disclosure, the processor may be configured to receive location information indicating a location of the second user terminal from the second user terminal through the communicator, and, based on the received location information, identify whether the second user is present in the space.

According to an embodiment of the disclosure, the received location information may include information about whether the second user terminal is connected to at least one of an access point (AP) disposed in the space, the first external device, or the second external device. The processor may be configured to, based on identifying that the second user terminal is connected to at least one of the AP, the first external device, or the second external device, identify that the second user is present in the space.

According to an embodiment of the disclosure, the received location information may include at least one of Global Positioning System (GPS) information of the second user terminal, information about a distance between the second user terminal and the first external device, or information about a distance between the second user terminal and the second external device.

According to an embodiment of the disclosure, the processor may be configured to receive the received location information from the second external device through the communicator. The location information may be obtained based on at least one of image data obtained through a camera of the second external device or sensing data obtained through a sensor of the second external device.

According to an embodiment of the disclosure, the processor may be configured to, after the control signal corresponding to the registered operation is transmitted to the first external device, receive the status information indicating the operation status of the first external device from the first external device through the communicator, identify whether the first external device is maintaining the registered operation based on the received status information, and control the communicator to transmit information about whether the first external device is maintaining the registered operation to the first user terminal.

According to an embodiment of the disclosure, the processor may be configured to, based on the registration request being received from the first user terminal through the communicator, identify whether the received registration request overlaps with pre-registered control information, and, based on the received registration request overlapping with the pre-registered control information, control the communicator to transmit information indicating that the received registration request overlaps with the pre-registered control information to the first user terminal.

According to an embodiment of the disclosure, provided is a method of controlling an electronic device including a communicator, the method including, based on a registration request of a first user, registering a preset event and an operation of a first external device corresponding to the registered preset event; based on the registered preset event occurring, identifying whether a second user is present in a space where the first external device is located; based on identifying that the second user is present in the space, providing a request to the second user to approve the registered operation; identifying whether the registered operation is approved by the second user; and based on the identifying whether the registered operation is approved by the second user, determining whether to transmit a control signal corresponding to the registered operation to the first external device.

According to an embodiment of the disclosure, the identifying whether the registered operation is approved by the second user may include, based on a response indicating an approval of the registered operation being received from the second user, or the response indicating the approval of the registered operation not being received from the second user for a preset threshold time, identifying the approval of the registered operation by the second user. The determining whether to transmit the control signal may include, based on the approval of the registered operation being identified, determining to transmit the control signal corresponding to the registered operation to the first external device, and the method further comprises, transmitting the control signal corresponding to the registered operation to the first external device.

According to an embodiment of the disclosure, the method may further include, based on identifying that the second user is not present in the space, controlling the communicator to transmit the control signal corresponding to the registered operation to the first external device.

According to an embodiment of the disclosure, the method may further include receiving status information indicating an operation status of the first external device from the first external device through the communicator; identifying whether the first external device is performing the registered operation based on the received status information; based on identifying that the first external device is not performing the registered operation, identifying whether the second user is present in the space where the first external device is located; and based on identifying that the first external device is performing the registered operation, not identifying whether the second user is present in the space where the first external device is located.

[Description of Drawings] These and/or other aspects of the disclosure will become apparent and more readily appreciated from the following description of embodiments, taken in conjunction with the accompanying drawings of which:
FIG. 1 is a view provided to explain a system according to one or more embodiments of the disclosure;
FIG. 2A is a flowchart illustrating a controlling method of an electronic device according to one or more embodiments of the disclosure;
FIG. 2B is a flowchart illustrating a controlling method of an electronic device 100 according to one or more embodiments of the disclosure in greater detail;
FIGS. 3 and 4 are views provided to explain various embodiments of the disclosure related to a message provided to a second user;
FIG. 5 is a flowchart illustrating a controlling method of an electronic device according to one or more embodiments of the disclosure;
FIG. 6 is a flowchart illustrating a controlling method of an electronic device according to one or more embodiments of the disclosure;
FIG. 7 is a flowchart illustrating a controlling method of an electronic device according to one or more embodiments of the disclosure;
FIGS. 8 and 9 are views provided to explain various embodiments of the disclosure related to transmitting information indicating that an operation corresponding to an event overlaps with pre-registered control information to a first user terminal;
FIG. 10 is a block diagram briefly illustrating configuration of an electronic device according to one or more embodiments of the disclosure; and
FIG. 11 is a view provided to explain a system according to one or more embodiments of the disclosure.

### [Mode for Invention]

The present disclosure may be modified in various ways, and may have various embodiments, so specific embodiments are illustrated in the drawings and described in detail in the detailed description. However, it is to be understood that the disclosure is not limited to specific exemplary embodiments, but include all modifications, equivalents, and/or alternatives according to exemplary embodiments of the disclosure. Throughout the description of the accompanying drawings, similar components may be denoted by similar reference numerals.

In describing the disclosure, when it is decided that a detailed description for the known functions or configurations related to the disclosure may unnecessarily obscure the gist of the disclosure, the detailed description therefor will be omitted.

In addition, the following exemplary embodiments may be modified in several different forms, and the scope of the technical spirit of the disclosure is not limited to the following exemplary embodiments. Rather, these exemplary embodiments make the disclosure thorough and complete, and are provided to completely transfer the spirit of the disclosure to those skilled in the art.

Terms used in the disclosure are used only to describe specific exemplary embodiments rather than limiting the scope of the disclosure. Singular forms are intended to include plural forms unless the context clearly indicates otherwise.

In the disclosure, the expressions "have", "may have", "include" or "may include" used herein indicate existence of corresponding features (e.g., elements such as numeric values, functions, operations, or components), but do not exclude presence of additional features.

In the disclosure, the expressions "A or B", "at least one of A or/and B", or "one or more of A or/and B", and the like may include any and all combinations of one or more of the items listed together. For example, the term "A or B", "at least one of A and B", or "at least one of A or B" may refer to all of the case (1) where at least one A is included, the case (2) where at least one B is included, or the case (3) where both of at least one A and at least one B are included.

Expressions "first", "second", "1st," "2nd," or the like, used in the disclosure may indicate various components regardless of sequence and/or importance of the components, will be used only in order to distinguish one component from the other components, and do not limit the corresponding components.

When it is described that an element (e.g., a first element) is referred to as being "(operatively or communicatively) coupled with/to" or "connected to" another element (e.g., a second element), it should be understood that it may be directly coupled with/to or connected to the other element, or they may be coupled with/to or connected to each other through an intervening element (e.g., a third element).

On the other hand, when an element (e.g., a first element) is referred to as being "directly coupled with/to" or "directly connected to" another element (e.g., a second element), it should be understood that there is no intervening element (e.g., a third element) in-between.

An expression "~configured (or set) to" used in the disclosure may be replaced by an expression, for example, "suitable for," "having the capacity to," "~designed to," "~adapted to," "~made to," or "~capable of" depending on a situation. A term "~configured (or set) to" may not necessarily mean "specifically designed to" in hardware.

Instead, an expression "~an apparatus configured to" may mean that an apparatus "is capable of" together with other apparatuses or components. For example, a "processor configured (or set) to perform A, B, and C" may mean a dedicated processor (e.g., an embedded processor) for performing the corresponding operations or a generic-purpose processor (e.g., a central processing unit (CPU) or an application processor) that may perform the corresponding operations by executing one or more software programs stored in a memory device.

In exemplary embodiments, a 'module' or a '~er' may perform at least one function or operation, and be implemented as hardware or software or be implemented as a combination of hardware and software. In addition, a plurality of 'modules' or a plurality of '~er' may be integrated into at least one module and be implemented as at least one processor (not shown) except for a 'module' or a '~er' that needs to be implemented as specific hardware.

Meanwhile, various elements and regions in the drawings are schematically drawn in the drawings. Therefore, the technical concept of the disclosure is not limited by a relative size or spacing drawn in the accompanying drawings.

Hereinafter, an embodiment according to the present disclosure will be described in detail with reference to the accompanying drawings so that a person with ordinary knowledge in the technical field to which the present disclosure belongs can easily implement the present disclosure.

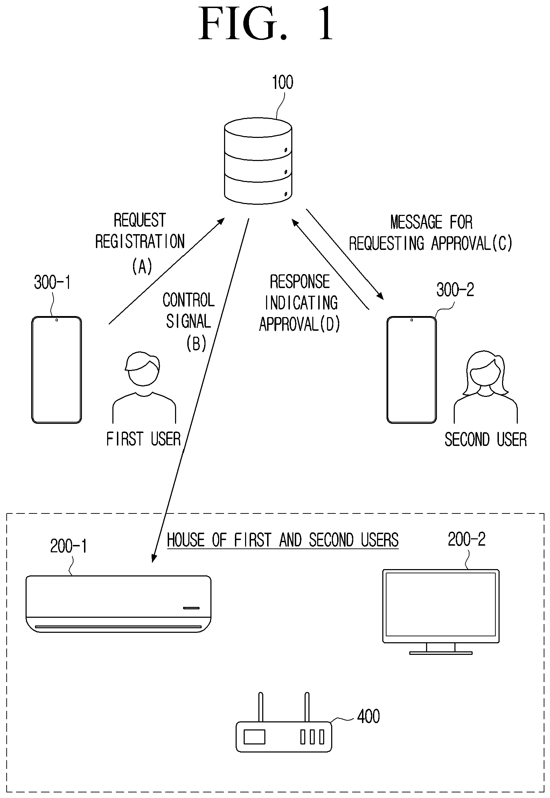

FIG. 1 is a view provided to explain a system according to one or more embodiments.

As shown in FIG. 1, a system according to the present disclosure may include an electronic device 100 and a plurality of IoT devices 200-1, 200-2, 300-1, 300-2.

The 'electronic device 100' according to the present disclosure refers to a device capable of providing Internet of Things (IoT) services. Specifically, the electronic device 100 may register and manage various devices as IoT devices constituting an IoT network, and may collect and store data for the plurality of IoT devices 200-1, 200-2, 300-1, 300-2. In addition, the electronic device 100 may process or analyze the collected data, and may receive requests from the plurality of IoT devices 200-1, 200-2, 300-1, 300-2, or transmit control commands to the plurality of IoT devices 200-1, 200-2, 300-1, 300-2 for controlling the plurality of IoT devices 200-1, 200-2, 300-1, 300-2. The so-called electronic device 100 may also be referred to by terms such as 'IoT server,' 'IoT cloud,' and the like.

In particular, the electronic device 100 may perform automation for an IoT device. Here, 'automation' refers to registering certain conditions and an operation of an IoT device corresponding to the certain conditions, and when the registered conditions are satisfied, automatically controlling the IoT device to perform the registered operation. The operation performed in accordance with automation may be referred to as 'automated operation' or 'automated routines.'

In the description of the present disclosure, the plurality of IoT devices 200-1, 200-2, 300-1, 300-2 are described separately as a plurality of external devices 200-1, 200-2, a plurality of user terminals 300-1, 300-2, and an AP 400 (access point). In addition, the plurality of external devices 200-1, 200-2 may include a first external device 200-1 and a second external device 200-2, and the plurality of user terminals 300-1, 300-2 may include a first user terminal 300-1 and a second user terminal 300-2.

Specifically, the 'first external device 200-1' refers to a device that is registered as a device to be controlled according to automation at the request of the first user, and the 'second external device 200-2' refers to a device that is different from the first external device 200-1. Hereinafter, the device registered as a device to be controlled according to automation at the request of the first user will be described as the first external device 200-1, but this does not mean that the second external device 200-2 cannot be registered as a device to be controlled according to automation. Meanwhile, the 'first user terminal 300-1' refers to a terminal device of the first user, and the 'second user terminal 300-2' refers to a terminal device of the second user.

Unlike the plurality of user terminals 300-1, 300-2, the plurality of external devices 200-1, 200-2 may be shared by the first user and the second user. The first user terminal 300-1 and the second user terminal 300-2 may be devices that can be carried by the first user and the second user, respectively, for personal use, whereas the first external device 200-1 and the second external device 200-2 may be devices that can be disposed in a space shared by the first user and the second user and used by the first user and the second user together.

For example, if the first user and the second user are family members, the first user terminal 300-1 and the second user terminal 300-2 may be devices such as smartphones, smartwatches, and the like that are carried by each of the first user and the second user for personal use, and the first external device 200-1 and the second external device 200-2 may be devices such as televisions, air conditioners, refrigerators, washing machines, and the like that are placed in a house where the first user and the second user reside together and may be used by the first user and the second user together.

In the following description of the present disclosure, it is assumed that the first user and the second user share a single space and share the first external device 200-1 and the second external device 200-2 disposed in the single space, as described in the example above.

FIG. 1 illustrates an exemplary case where the first user terminal 300-1 is a smartphone of the first user, the second user terminal 300-2 is a smartphone of the second user, the first external device 200-1 is an air conditioner disposed in a house of the first user and the second user, and the second external device 200-2 is a television disposed in the house of the first user and the second user. However, it should be understood that devices other than the examples of FIG. 1 may be included in a system according to the present disclosure.

Meanwhile, the 'AP 400' refers to a device that configures a wireless network to enable the plurality of IoT devices 200-1, 200-2, 300-1, 300-2 to perform communication and exchange data. Specifically, the AP 400 may configure a Wi-Fi network to enable the plurality of IoT devices 200-1, 200-2, 300-1, 300-2 to perform communication with the electronic device 100 or between the plurality of IoT devices 200-1, 200-2, 300-1, 300-2. For example, a process of registering the plurality of external devices 200-1, 200-2 and the plurality of user terminals 300-1, 300-2 as IoT devices, a process of registering automated operations for the IoT devices, a process of controlling the IoT devices, etc. may be performed based on the transmission and reception of signals via the AP 400.

Meanwhile, hereinafter, operations for transmitting and receiving signals/data/information between the electronic device 100, the plurality of external devices 200-1, 200-2, and the plurality of user terminals 300-1, 300-2 are described, which may be performed in a Wi-Fi communication method via the AP 400, or may be performed in another communication method that does not go through the AP 400 (e.g., Bluetooth, etc.). Accordingly, hereinafter, the electronic device 100 transmitting control signals to the first external device 200-1 may include both the electronic device 100 transmitting control signals to the first external device 200-1 via the AP 400 and the electronic device 100 transmitting control signals to the first external device 200-1 without going through the AP 400.

As shown in FIG. 1, the electronic device 100 may receive a registration request A from the first user terminal 300-1 of the first user. Here, the 'registration request' refers to a user request for registration of an automated operation. Specifically, the registration request may include information about a preset event and an operation of the first external device 200-1 corresponding to the event.

For example, the first user may set "an event of the first user arriving near the house" and "an operation of turning on the power" as an operation of the air conditioner (first external device 200-1) corresponding to the event through an application provided by the first user terminal 300-1, and the first user terminal 300-1 may transmit a registration request to the electronic device 100 accordingly. Upon receiving the registration request from the first user, the electronic device 100 may register an event preset by the first user and an operation of the first external device 200-1 corresponding to the event as an automated operation.

When the preset event occurs after the automated operation is registered, the electronic device 100 may transmit a control signal B to the first external device 200-1 to perform the operation of the first external device 200-1 corresponding to the event. In the example described above, when the event where "the first user arrives near the house" occurs, the electronic device 100 may transmit a control signal that causes the first external device 200-1 to perform the "operation to turn on the power" to the external device.

Meanwhile, even if a control signal is transmitted to the first external device 200-1 as the preset event occurs after the automated operation is registered by the first user, and the first external device 200-1 performs the operation corresponding to the control signal based on the control signal, when the second user different from the first user is present in the space where the first external device 200-1 is located, there is a possibility that the operation of the external device may be changed by the second user.

For example, in the example described above, after the "operation of turning on the air conditioner" is performed as a result of the "event where the first user arrives near the house", the "operation of turning off the air conditioner" may be performed by the operation of the second user, which leads to a control result that does not conform to the intention of the first user who registered the automated operation.

Therefore, before transmitting the control signal B to the first external device 200-1, the electronic device 100 may transmit a message C to the second user terminal 300-2 of the second user to request approval from the second user, and may transmit the control signal B to the first external device 200-1 only when a response D indicating approval is received from the second user.

Hereinafter, various embodiments for resolving conflicts between automated operations for IoT devices shared by a plurality of users will be described, including embodiments related to transmitting the message C to the second user terminal 300-2 of the second user to request approval from the second user, and receiving the response D indicating approval from the second user. The terms and premises defined in the description with reference to FIG. 1 are also applied to the embodiments described below.

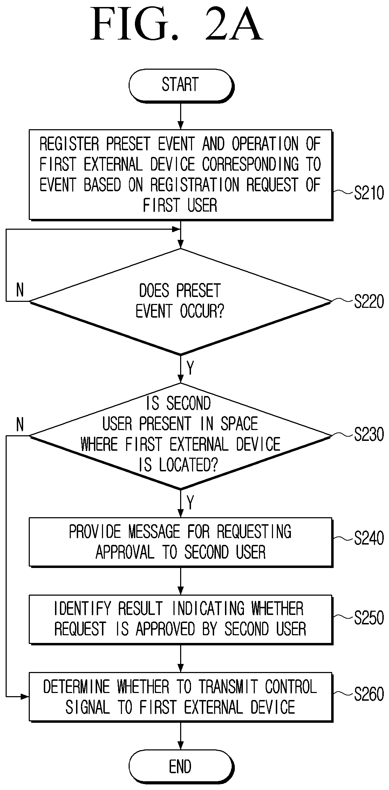

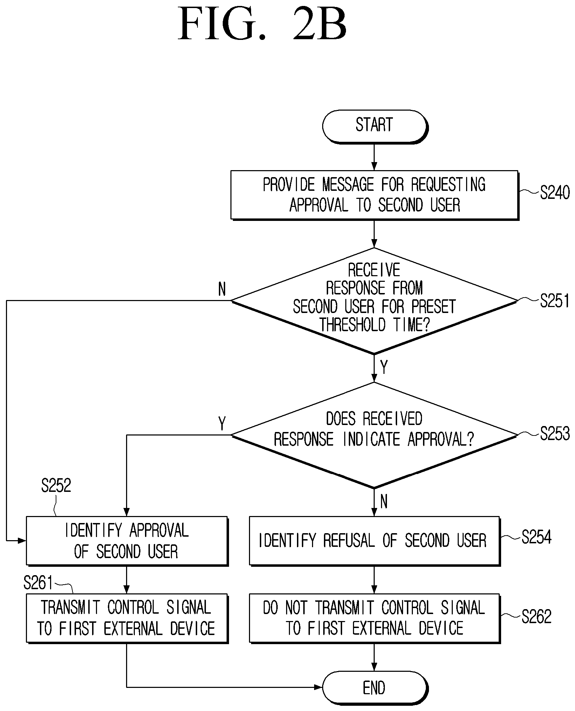

FIG. 2A is a flowchart illustrating a controlling method of the electronic device 100 according to one or more embodiments, and FIG. 2B is a flowchart illustrating a controlling method of the electronic device 100 according to one or more embodiments in greater detail.

As shown in FIG. 2A, the electronic device 100 may register a preset event and an operation of the first external device 200-1 corresponding to the event based on the registration request from the first user (S210).

Specifically, the electronic device 100 may receive a registration request from the first user terminal 300-1 of the first user, and may register a set of a preset event included in the registration request and an operation of the first external device 200-1 corresponding to the event as an automated operation.

For example, the registration request may include an event of "the first user arriving near the house" and an operation of "turning on the power" the first external device 200-1 corresponding to the event, so the electronic device 100 may register the event of "the first user arriving near the house" and the operation of "turning on the power of the first external device 200-1" as a single automated operation.

When the preset event occurs (S220-Y), the electronic device 100 may identify whether the second user is present in the space where the first external device 200-1 is located (S230).

Specifically, the occurrence of the preset event may be identified directly by the electronic device 100, or may be identified based on information received by the first user terminal 300-1 or an external device.

For example, when the preset event is an "event in which the first user arrives near the house" as in the example described above, the electronic device 100 may receive location information indicating the location of the first user terminal 300-1 from the first user terminal 300-1, and identify the occurrence of the event based on the received location information.

As another example, when the preset event is "an event in which the indoor temperature of the house is greater than or equal to 30°C", the electronic device 100 may receive temperature information indicating the indoor temperature of the house from an external device capable of measuring the indoor temperature of the house, and identify the occurrence of the event based on the received temperature information.

As another example, when the preset event is "an event in which it is 6:30 p.m.," the electronic device 100 may identify the occurrence of the event using a real-time clock (RTC) included in the electronic device 100, or a network time protocol (NTP), or the like.

When the preset event occurs, the electronic device 100 may identify whether the second user other than the first user is present in the space where the first external device 200-1 is located. Specifically, information about users of the plurality of IoT devices 200-1, 200-2, 300-1, 300-2 (e.g., account information of family members, etc.) may be stored in the electronic device 100. When the preset event occurs, the electronic device 100 may identify whether at least one of the users among the plurality of IoT devices 200-1, 200-2, 300-1, 300-2 is present in the space where the first external device 200-1 is located (e.g., the first user's house).

Although the process of identifying whether a single user, i.e., the second user, is present in the space where the first external device 200-1 is located will be described below, this is for illustrative purposes only, as it is possible to identify a plurality of users present in the space where the first external device 200-1 is located, and the operations described below with respect to the second user may be similarly performed with respect to each of the plurality of users.

The electronic device 100 may identify whether the second user is present in the space where the first external device 200-1 is located based on location information received from the second user terminal 300-2 or the plurality of external devices 200-1, 200-2. Here, the term "location information" refers collectively to information indicating the location of the second user. Specifically, the location information may include not only information indicating the location of the second user but also information indicating the location of the second user terminal 300-2 of the second user.

Hereinafter, various embodiments for identifying whether the second user is present in the space where the first external device 200-1 is located using various types of location information will be described.

In one or more embodiments, the electronic device 100 may receive location information indicating the location of the second user terminal 300-2 from the second user terminal 300-2 and, based on the received location information, identify whether the second user is present in the space where the first external device 200-1 is located.

In one or more embodiments, the location information may include information indicating whether the second user terminal 300-2 is connected to at least one of the AP 400 (access point) disposed in the space where the first external device 200-1 is located, the first external device 200-1, or the second external device 200-2. In this case, when it is identified that the second user terminal 300-2 is connected to at least one of the AP 400, the first external device 200-1, or the second external device 200-2, the electronic device 100 may identify that the second user is present in the space where the first external device 200-1 is located.

Here, the 'information indicating whether the connection is made' may include not only information indicating that the second user terminal 300-2 is 'currently' connected to at least one of the AP 400 disposed in the space where the first external device 200-1 is located, the first external device 200-1, or the second external device 200-2 but also information indicating a history of connection in the 'past' within a threshold time.

In one or more embodiments, the location information may include at least one of global positioning system (GPS) information of the second user terminal 300-2, information about a distance between the second user terminal 300-2 and the first external device 200-1, or information about a distance between the second user terminal 300-2 and the second external device 200-2.

Specifically, when it is identified that the GPS information of the second user terminal 300-2 corresponds to the space where the first external device 200-1 is located, the electronic device 100 may identify that the second user is present in the space where the first external device 200-1 is located.

In addition, when at least one of the distance between the second user terminal 300-2 and the first external device 200-1 or the distance between the second user terminal 300-2 and the second external device 200-2 is less than a preset threshold distance, the electronic device 100 may identify that the second user is present in the space where the first external device 200-1 is located.

Meanwhile, the electronic device 100 may receive location information from the plurality of external devices 200-1, 200-2. In this case, the location information may be obtained based on at least one of image data obtained via cameras of the plurality of external devices 200-1, 200-2 or sensing data obtained via sensors of the plurality of external devices 200-1, 200-2.

For example, the electronic device 100 may receive image data obtained through a camera of a TV, which is the second external device 200-2. When the received image data includes the second user, the electronic device 100 may identify that the second user is present in the space where the first external device 200-1 is located.

In another example, the electronic device 100 may obtain sensing data obtained through an infrared sensor of the TV, which is the second external device 200-2. When the sensing data indicates that a user is detected adjacent to the TV, the electronic device 100 may identify that the second user is present in the space where the first external device 200-1 is located.

When it is identified that the second user is not present in the space where the first external device 200-1 is located (S230-N), the electronic device 100 may determine whether to transmit a control signal corresponding to the operation of the first external device 200-1 to the first external device 200-1 (S260). In this case, the electronic device 100 may determine that the control signal corresponding to the operation of the first external device 200-1 is to be transmitted to the first external device 200-1, and may transmit the control signal to the first external device 200-1. In other words, when there is no user present in the space where the first external device 200-1 is located, the electronic device 100 may transmit the control signal corresponding to the operation of the first external device 200-1 to the first external device 200-1 without any further operation, since there is no user present in the space where the first external device 200-1 is located to manipulate the first external device 200-1 to be placed in an automated operation.

On the other hand, when it is identified that the second user is present in the space where the first external device 200-1 is located (S230-Y), the electronic device 100 may provide a message to the second user to request approval to control the operation of the first external device 200-1 (S240).

Specifically, when it is identified that the second user is present in the space where the first external device 200-1 is located, the electronic device 100 may transmit information about a message for requesting approval to control the operation of the first external device 200-1 to at least one of the second user terminal 300-2 of the second user or the second external device 200-2 present in the space where the first external device 200-1 is located.

For example, when the electronic device 100 transmits the information about a message for requesting approval to control the operation of the first external device 200-1 to the second user terminal 300-2, the message for requesting approval to control the operation of the first external device 200-1 may be displayed on a display of the second user terminal 300-2.

In another example, when the electronic device 100 transmits information about a message for requesting approval to control the operation of the first external device 200-1 to the second external device 200-2, which is a speaker, the message for requesting approval to control the operation of the first external device 200-1 may be output through the speaker.

After providing the message for requesting approval to the second user, the electronic device 100 may identify a result indicating whether the second user approves or disapproves the request (S250). Specifically, when the message for requesting approval is provided to the second user, the second user may respond with a response indicating approval, a response indicating disapproval, or no response. Then, the electronic device 100 may identify a result indicating whether the request is approved by the second user or not based on the second user's response or non-response. Hereinafter, with reference to FIG. 2B, which more specifically illustrates the steps after step S240 of FIG. 2A, embodiments for each of the cases where the second user responds with no response, where the second user responds with a response indicating approval, and where the second user responds with a response indicating disapproval will be described.

After providing the message to the second user to request approval, the electronic device 100 may identify whether a response is received from the second user within a preset threshold time. Here, the threshold time may be, for example, 10 seconds and may be changed based on the developer's or user's settings.

In one or more embodiments, neither a response indicating approval nor a response indicating disapproval may be received from the second user during the preset threshold time. In other words, when the second user shows no response, it may be desirable to identify the response as approval or disapproval.

For example, it may be desirable to transmit a control signal corresponding to the operation of the first external device 200-1 to the second user even when no response is received from the second user, such as when it is identified the second user is present in the space where the first external device 200-1 is located and a message is provided to the second user to request approval to control the operation of the first external device 200-1, but the second user has left the space in which the first external device 200-1 is located.

Accordingly, when no response is received from the second user during the preset period (S251), the electronic device 100 may identify the approval of the second user (S252), and transmit a control signal corresponding to the operation of the first external device 200-1 to the first external device 200-1 (S261).

While FIG. 2B illustrates identifying the second user's non-response as an approval, it is also possible to identify the second user's non-response as disapproval.

For example, it is possible that the second user is identified as being present in the space where the first external device 200-1 is located and a message is provided to the second user to request approval to control the operation of the first external device 200-1, but the second user may respond with a non-response indicating that the second user intends to decline the approval. In this case, it may be desirable not to transmit the control signal corresponding to the operation of the first external device 200-1 to the first external device 200-1, as opposed to the embodiment described above.

Accordingly, when no response is received from the second user for a preset period of time, the electronic device 100 may identify the second user's disapproval, and may not transmit the control signal corresponding to the operation of the first external device 200-1 to the first external device 200-1.

When a response is received from the second user during the preset threshold time, the electronic device 100 may identify whether the received response is a response indicating approval (S253).

In one or more embodiments, the electronic device 100 may receive a response indicating approval from the second user (S253-Y). Upon receiving the response indicating approval from the second user, the electronic device 100 may identify the approval of the second user (S252). When the approval is identified, the electronic device 100 may determine to transmit a control signal corresponding to the operation of the first external device 200-1 (i.e., the registered operation) to the first external device 200-1, and may transmit the control signal corresponding to the operation of the first external device 200-1 to the first external device 200-1 (S261).

For example, when a message is displayed on the display of the second user terminal 300-2 to request approval to control the operation of the first external device 200-1, the second user may enter a user input indicating approval into the second user terminal 300-2 and accordingly, the electronic device 100 may receive a response indicating approval from the second user terminal 300-2.

In another example, when a message for requesting approval to control the operation of the first external device 200-1 is output through a speaker, the second user may utter a voice indicating approval and accordingly, the electronic device 100 may receive a response indicating approval by receiving a signal corresponding to the voice uttered by the second user from the second user terminal 300-2.

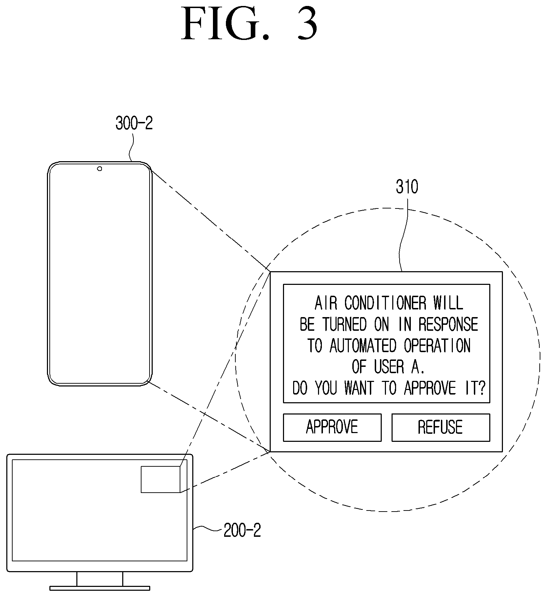

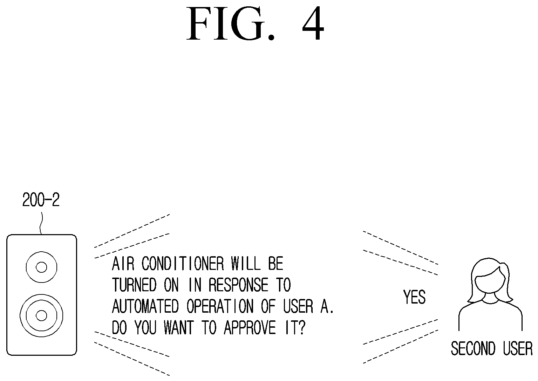

Various embodiments regarding a method of providing a message to the second user to request approval to control the operation of the first external device 200-1 will be described in greater detail with reference to FIGS. 3 and 4.

In one or more embodiments, the electronic device 100 may receive a response indicating disapproval from the second user (S253-N). Upon receiving the response indicating disapproval from the second user, the electronic device 100 may identify disapproval from the second user (S254). When the disapproval is identified, the electronic device 100 may not transmit a control signal corresponding to the operation of the first external device 200-1 to the first external device 200-1 (S262).

When the control signal corresponding to the operation of the first external device 200-1 is not transmitted to the first external device 200-1, the electronic device 100 may transmit a message indicating that the second user's approval has not been made and that control according to the registered automated operation has not been performed, to the first user terminal 300-1. Accordingly, the first user may adjust an event included in the registration request and the corresponding operation of the first external device 200-1. In addition, the electronic device 100 may transmit the control signal corresponding to the operation of the first external device 200-1 adjusted by the first user to the first external device 200-1.

According to one or more embodiments described above with reference to FIGS. 1 to 2B, the electronic device 100 may effectively address the problem of conflicting control over an IoT device among a plurality of users.

In particular, when a user different from the user who registered the automated operation is present in the house, the electronic device 100 may grant priority of control to the actual user in the house by requesting approval for the automated operation from the other user in the house. Accordingly, it is possible to prevent the user who registered the automated operation from taking control of the automated operation against the intention of the actual user in the house. In addition, it is possible to prevent indiscriminate control against the intention of the user who registered the automated operation by the actual user in the house.

FIGS. 3 and 4 are views provided to explain various embodiments related to a message provided to the second user.

As described above, when it is identified that the second user is present in the space where the first external device 200-1 is located, the electronic device 100 may provide a message (hereinafter, referred to as a "message for requesting approval") to the second user to request approval to control the operation of the first external device 200-1. Upon receiving a response indicating approval from the second user, the electronic device 100 may transmit a control signal corresponding to the operation of the first external device 200-1 to the first external device 200-1.

In one or more embodiments, the electronic device 100 may transmit information about the message for requesting approval to the second user terminal 300-2. In this case, the message for requesting approval may be displayed on a display of the second user terminal 300-2.

In one or more embodiments, the electronic device 100 may transmit information about the message for requesting approval to the second external device 200-2 (e.g., a television). In this case, the message for requesting approval may be displayed on a display of the second external device 200-2.

Referring to the example of FIG. 3, a display of the second user terminal 300-2 or the second external device 200-2 may show a user interface 310 that includes a message for requesting approval, an item corresponding to approval, and an item corresponding to disapproval. For example, the message for requesting approval may be "Mr. A's automated operation will turn on the air conditioner. Do you want to approve it?"

When a message for requesting approval is displayed on the display of the second user terminal 300-2, the second user may enter a user input into the second user terminal 300-2 to select an item corresponding to approval, or may enter a user input into the second user terminal 300-2 to select an item corresponding to disapproval. Accordingly, the electronic device 100 may receive a response from the second user terminal 300-2 indicating approval or disapproval.

In one or more embodiments, the electronic device 100 may transmit information about the message for requesting approval to the second external device 200-2, which is a speaker. In this case, the message for requesting approval may be output as a voice through the speaker.

Referring to the example of FIG. 4, the message for requesting approval may be output via the second external device 200-2 as a voice, such as "Mr. A's automated operation will turn on the air conditioner. Do you want to approve it?" may be output through the second external device 200-2.

When the message for requesting approval is output through a speaker, the second user may utter a voice indicating approval, such as "yes," or a voice indicating disapproval, such as "no" and accordingly, the electronic device 100 may receive a response indicating approval or disapproval from the speaker.

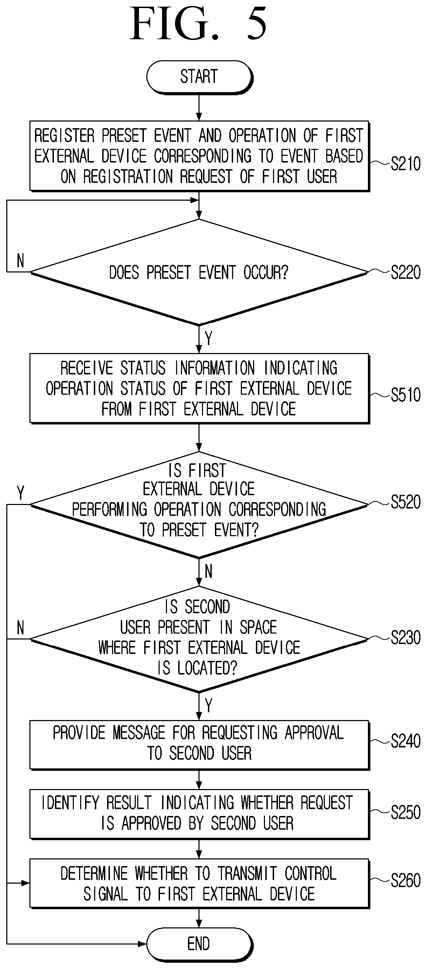

FIG. 5 is a flowchart illustrating a controlling method of the electronic device 100 according to one or more embodiments.

Specifically, FIG. 5 is a flowchart illustrating a controlling method in which step S510 and step 520 are added to the controlling method described with reference to FIG. 2A. Since the controlling method including step S210 to step S260 has been described above with reference to FIG. 2A, step S510 and step 520 will be described below.

In one or more embodiments, the electronic device 100 may receive status information indicating an operation status of the first external device 200-1 from the first external device 200-1 (S510). Specifically, when a preset event occurs (S220-Y), the electronic device 100 may send a request to transmit status information to the first external device 200-1 and accordingly, the electronic device 100 may receive status information indicating an operation status of the first external device 200-1 from the first external device 200-1.

Here, the 'status information' refers collectively to information that indicates the status of the first external device 200-1 according to the operation of the first external device 200-1. For example, when the first external device 200-1 is an air conditioner, the status information may include information about whether the air conditioner is turned on, the set temperature of the air conditioner, the operation mode of the air conditioner, and the like. In another example, when the first external device 200-1 is a washing machine, the status information may include information about whether the washing machine is powered on, whether the washing machine is performing a wash, the washing mode of the washing machine, the remaining wash time, and the like.

When the status information is received, the electronic device 100 may identify whether the first external device 200-1 is performing an operation corresponding to the preset event based on the status information (S520). For example, when the first external device 200-1 is an air conditioner, and the operation corresponding to the preset event is "operate the air conditioner at a set temperature of 25°C," the electronic device 100 may identify, based on the status information, whether the air conditioner is operating at the set temperature of 25°C.

When it is identified that the first external device 200-1 is performing an operation corresponding to the preset event (S520-Y), the electronic device 100 may not identify whether the second user is present in the space where the first external device 200-1 is located.

In other words, when the first external device 200-1 is already performing an operation corresponding to the preset event, there is no need to transmit a control signal to the first external device 200-1 to cause the first external device 200-1 to perform an operation corresponding to the event, so there is no need to identify whether the second user is present in the space where the first external device 200-1 is located. Accordingly, the electronic device 100 may not identify whether the second user is present in the space where the first external device 200-1 is located, in which case the electronic device 100 may transmit information indicating that the first external device 200-1 is already performing an operation corresponding to the event to the first user terminal 300-1.

When it is identified that the first external device 200-1 is not performing an operation in corresponding to the event (S520-N), the electronic device 100 may identify whether the second user is present in the space where the first external device 200-1 is located (S230).

In other words, unless the first external device 200-1 is already performing an operation corresponding to the event, it is necessary to transmit a control signal to the first external device 200-1 to cause the first external device 200-1 to perform an operation corresponding to the event, so it is necessary to obtain approval from the second user present in the space where the first external device 200-1 is located. Accordingly, the electronic device 100 may identify whether the second user is present in the space where the first external device 200-1 is located, and may transmit a control signal to the first external device 200-1 based on a result of the identification.

Meanwhile, the above embodiment has described that when a preset event occurs, the electronic device 100 receives status information indicating an operation status of the first external device 200-1 from the first external device 200-1, and identifies whether the first external device 200-1 is performing an operation corresponding to the preset event based on the received status information. However, according to another embodiment, the electronic device 100 may also receive status information indicating an operation status of the first external device 200-1 from the first external device when the second user is present in the space where the first external device 200-1 is located, and identify whether the first external device 200-1 is performing an operation corresponding to a preset event based on the received status information.

According to one or more embodiments described above with reference to FIG. 5, the electronic device 100 may address the issue of conflicting control between multiple users of an IoT device in a more efficient manner by considering whether the first external device 200-1 is already performing an operation corresponding to a preset event.

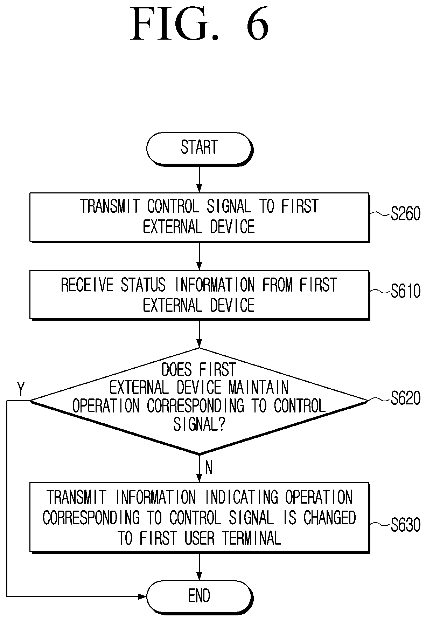

FIG. 6 is a flowchart illustrating a controlling method of the electronic device 100 according to one or more embodiments.

As described above, the electronic device 100 may transmit a control signal corresponding to an operation of the first external device 200-1 to the first external device 200-1. Specifically, when the second user is not present in the space where the first external device 200-1 is located, or when a response indicating approval is received from the second user present in the space where the first external device 200-1 is located, the electronic device 100 may transmit a control signal (hereinafter, referred to as a 'control signal') to the first external device 200-1 for controlling the operation of the first external device 200-1.

However, at the time when the control signal is transmitted to the first external device 200-1, the second user may not be present in the space where the first external device 200-1 is located, but the second user may be subsequently present in the space where the first external device 200-1 is located and the operation status of the first external device 200-1 may be changed by the second user.

In addition, the operation status of the first external device 200-1 may be changed by the second user even though a response indicating approval is received from the second user present in the space where the first external device 200-1 is located and a control signal is transmitted to the first external device 200-1.

Thus, the electronic device 100 needs to monitor the operation status of the first external device 200-1 even after transmitting the control signal to the first external device 200-1. Accordingly, FIG. 6 describes one or more embodiments related to the operation of the first external device 200-1 after transmitting the control signal to the first external device 200-1.

As shown in FIG. 6, the electronic device 100 may receive status information from the first external device 200-1 after the control signal is transmitted to the first external device 200-1 (S610). As described above, the status information refers collectively to information indicating a status of the first external device 200-1 based on an operation of the first external device 200-1.

Specifically, after the control signal is transmitted to the first external device 200-1, the electronic device 100 may transmit a request to the first external device 200-1 to transmit the status information according to a preset period, and may receive the status information from the first external device 200-1 accordingly. Meanwhile, the request to transmit the status information may include a request to not transmit the status information when a preset termination condition is met or when a preset period of time has elapsed.

Based on the status information, the electronic device 100 may identify whether the first external device 200-1 is maintaining the operation corresponding to the control signal (S620). In addition, the electronic device 100 may transmit information about whether the first external device 200-1 is maintaining the operation corresponding to the control signal to the first user terminal 300-1.

Specifically, when it is identified that the first external device 200-1 is identified as maintaining the operation corresponding to the control signal (S620-Y), the electronic device 100 may not perform any further operations. However, in some embodiments, information indicating that the first external device 200-1 is maintaining the operation corresponding to the control signal may be transmitted to the first user terminal 300-1.

Meanwhile, when it is identified that the first external device 200-1 is not maintaining the operation corresponding to the control signal (S620-N), the electronic device 100 may transmit information indicating that the operation corresponding to the control signal of the first external device 200-1 has changed, to the first user terminal 300-1 (S630).

For example, when the first external device 200-1 is an air conditioner and the operation corresponding to the control signal is "operate the air conditioner at a set temperature of 25°C", the electronic device 100 may identify whether the "operate the air conditioner at a set temperature of 25°C" is being maintained based on the status information. When it is identified that the "operate the air conditioner at a set temperature of 28°C" is being performed, the electronic device 100 may transmit a message such as "The set temperature has been changed to 28°C" to the first user terminal 300-1.

As a result, the first user may perform a remote control to change the set temperature of the air conditioner, or change the set temperature of the air conditioner by contacting the second user, and at least be aware that the set temperature has been changed against his or her intention.

According to one or more embodiments described above with reference to FIG. 6, the electronic device 100 may monitor the change in the status of the device to be controlled by the actual user in the house after the automation operation is initiated, and notifies the user who registered the automation operation of the change in the status, thereby improving the user's reliability regarding the automation operation.

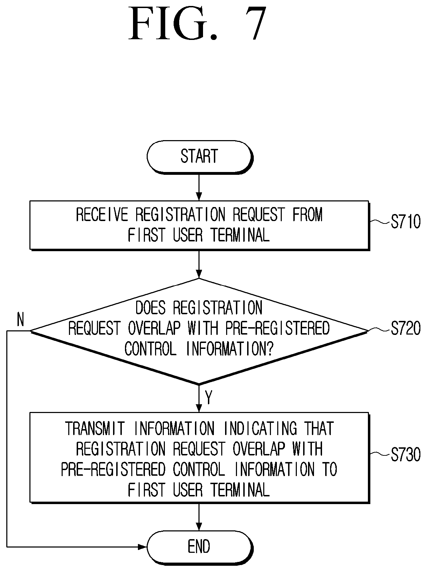

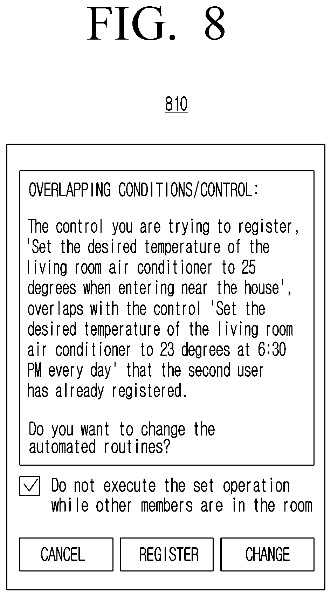

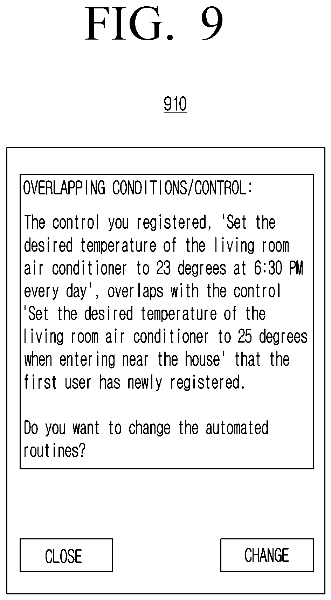

FIG. 7 is a flowchart illustrating a controlling method of the electronic device 100 according to one or more embodiments. FIGS. 8 and 9 are views provided to explain various embodiments related to transmitting information indicating that an operation corresponding to an event overlaps with pre-registered control information to the first user terminal 300-1. Hereinafter, the present disclosure will be described with reference to FIGS. 8 and 9 together with FIG. 7.

One or more embodiments for ensuring that after an automated operation regarding the first external device 200-1 is registered, the operation according to the intention of the first user is not conflicted by the second user have been described above. However, the electronic device 100 may also control that the operation according to the intention of the first user is not conflicted by the second user before registering the automated operation regarding the first external device 200-1.

Referring to FIG. 7, the electronic device 100 may receive a registration request from the first user terminal 300-1 (S710). Upon receiving the registration request from the first user terminal 300-1, the electronic device 100 may identify whether the registration request overlaps with pre-registered control information (S720).

Here, the 'pre-registered control information' refers to information indicating an automated operation that is registered by the first user or another user before the first user's registration request is received. When a registration request 'overlaps' with pre-registered control information, it means that the events and operations included in the registration request are likely to conflict with the events and operations included in the pre-registered control information. In particular, when a registration request overlaps with pre-registered control information, it may mean that the time of occurrence of an event in the registration request overlaps with the time of occurrence of an event in the pre-registered control information, or that an operation in the registration request is in conflict with an operation in the pre-registered control information.

For example, the registration request of the first user may include an event "the first user enters the vicinity of the house" and an operation of the first external device 200-1 (air conditioner) corresponding to the event, "set the desired temperature of the air conditioner to 25°C". Meanwhile, before the registration request of the first user is received, an event that "it is 6:30 p.m." and an operation of the first external device 200-1 (air conditioner) corresponding to the event, "set the desired temperature of the air conditioner to 23°C" may be registered as an automated operation by the second user. Here, the operation of setting the desired temperature of the air conditioner to 25°C or 23°C may include the operation of turning on the air conditioner if the air conditioner is turned off.

In this case, the electronic device 100 may identify that the event "the first user enters the vicinity of the house" and the event "it is 6:30 p.m." may overlap in time, and that the operation "set the desired temperature of the air conditioner to 25°C" and the operation "set the desired temperature of the air conditioner to 23°C" may conflict with each other. Thus, in this case, the electronic device 100 may identify that the registration request overlaps with pre-registered control information.

When the registration request does not overlap with pre-registered control information (S720-N), the electronic device 100 may register the automated operation based on the registration request. The electronic device 100 may also transmit information indicating that the registration request does not overlap with the pre-registered control information, to the first user terminal 300-1.

When the registration request overlaps with the pre-registered control information (S720-Y), the electronic device 100 may transmit information indicating that the registration request overlaps with the pre-registered control information, to the first user terminal 300-1 (S730).

When the information indicating that the registration request overlaps with the pre-registered control information is transmitted to the first user terminal 300-1, the first user terminal 300-1 may display a user interface on a display of the first user terminal 300-1, which includes the information indicating that the registration request overlaps with the pre-registered control information.

Referring to the example of FIG. 8, a user interface 810
may include a message indicating that the registration request overlaps with the pre-registered control and that specifically what is the overlapping control, such as "the control you are registering 'when entering the vicinity of the house, set the desired temperature of the living room air conditioner to 25°C" overlaps with the control pre-registered by the second user, 'set the desired temperature of the living room air conditioner to 23°C every day at 6:30 p.m.'", and a message asking whether you wish to change the automated operation, such as "do you want to change the automated routines?".

In addition, the user interface 810 may include items for selecting the option "do not execute the set operation while other members are present", items for canceling the registration request, performing registration according to the registration request prior to the change, and changing the registration request.

When the user interface 810 is displayed on the display of the first user terminal 300-1, the first user may select one of the items included in the user interface 810 to select the option "do not execute the set operation while other members are present", change the registration request so that it does not overlap with the pre-registered control information, cancel the registration request, or proceed with the registration according to the registration request prior to the change.

However, when the first user selects the "do not execute the set operation while other members are present" option, changes the registration request so that it does not overlap with pre-registered control information, or cancels the registration request, there is no problem; however, when proceeding with the registration according to the registration request prior to the change, it may be desirable to transmit a notification message to the second user.

Accordingly, when an automated operation is registered according to the registration request that overlaps with the pre-registered control information, the electronic device 100 may transmit information indicating that the automated operation is registered according to the registration request overlapping with the pre-registered control information, to the second user terminal 300-2. When the information indicating that the automated operation is registered according to the registration request overlapping with the pre-registered control information is transmitted to the second user terminal 300-2, the second user terminal 300-2 may display a user interface on the display of the second user terminal 300-2, which includes the information indicating that the automated operation is registered according to the registration request overlapping with the pre-registered control information.

Referring to the example in FIG. 9, a user interface 910 may include a message indicating that the automated operation is registered according to the registration request overlapping with the pre-registered control information and that specifically what is the overlapping control, such as "the control you registered, 'set the desired temperature of the living room air conditioner to 23°C every day at 6:30 p.m." overlaps with the control newly registered by the first user, 'when entering the vicinity of the house, set the desired temperature of the living room air conditioner to 25°C.'", and a message asking whether you wish to change the automated operation, such as "do you want to change the automated routines?".

In addition, the user interface 910 may include a close item for allowing a user to select disapproval of the registration request change and a change item for allowing a user to select the registration request change.

When the user interface 910 is displayed on the display of the second user terminal 300-2, the second user may decline to change the registration request or change the registration request by selecting one of the items included in the user interface 910.

According to one or more embodiments described above with reference to FIGS. 7 to 9, when a registration request overlaps with pre-registered control information, the electronic device 100 may transmit information indicating that the registration request overlaps with the pre-registered control information to a user terminal, making it possible for users to adjust automated operations with each other.

While the above describes an embodiment of transmitting information indicating that the registration request overlaps with the pre-registered control information to a user terminal so as to enable users to adjust automated operations with each other, the electronic device 100 may also prioritize the automated operation of a user with a higher preset priority when the registration request overlaps with the pre-registered control information.

For example, a higher priority may be set for the first user, the user who registered the automated operation, than for the second user, the actual user present in the house, in which case the electronic device 100 may prioritize the automated operation registered by the first user with the higher priority over the automated operation registered by the second user. In this case, the electronic device 100 may transmit a notification message indicating that the automated operation of the first user is prioritized, to the second user terminal 300-2 of the second user. Accordingly, the electronic device 100 may prevent indiscriminate control by an actual user of a low priority in the house against the of a user with a high priority.

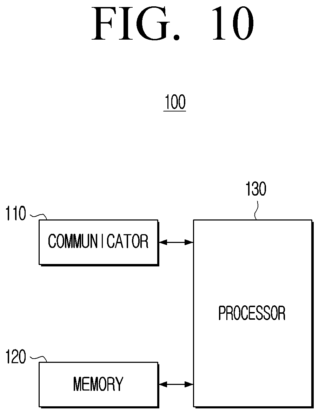

FIG. 10 is a block diagram briefly illustrating configuration of the electronic device 100 according to one or more embodiments.

As shown in FIG. 10, the electronic device 100 according to one or more embodiments includes a communicator 110, a memory 120, and a processor 130. However, it should be appreciated that the configurations shown in FIG. 10 are exemplary only, and that new configurations may be added in addition to those shown in FIG. 10 or that some configurations may be omitted in practicing the present disclosure.

The communicator 110 includes circuitry, and may perform communication with an external device. Specifically, the processor 130 may receive various data or information from an external device connected via the communicator 110, and may transmit various data or information to the external device.

The communicator 110 may include at least one of a Wi-Fi module, a Bluetooth module, a wireless communication module, an NFC module, or a Ultra-Wide Band (UWB) module. Specifically, each of the Wi-Fi module and Bluetooth module may perform communication using a Wi-Fi method and a Bluetooth method, respectively. When using a Wi-Fi module or a Bluetooth module, various connection information such as SSID is first transmitted and received, and various information may be transmitted and received after establishing a communication connection using the same.

In addition, the wireless communication module may perform communication according to various communication standards such as IEEE, Zigbee, 3^{rd} Generation (3G), 3^{rd} Generation Partnership Project (3GPP), Long Term Evolution (LTE), 5^{th} Generation (5G), etc. In addition, the NFC module may perform communication in a Near Field Communication (NFC) communication method using a band of 13.56MHz among various RF-ID frequency bands such as 135kHz, 13.56MHz, 433MHz, 860~960MHz, and 2.45GHz. In addition, through communication between UWB antennas, the UWB module may accurately measure Time of Arrival (ToA), which is the time for a pulse to reach a target, and Ange of Arrival (AoA), which is the angle of arrival of the pulse at the transmitter, and accordingly, may accurately recognize precise distance and position indoors within an error range of tens of centimeters.

In one or more embodiments, the processor 130 may receive a registration request from of the first user terminal 300-1 from the first user terminal 300-1 via the communicator 110. The processor 130 may control the communicator 110 to transmit a message to request approval to the second user terminal 300-2. The processor 130 may control the communicator 110 to transmit a control signal for controlling the first external device 200-1 to the first external device 200-1. The processor 130 may receive, via the communicator 110, status information indicating an operation status of the first external device 200-1 from the first external device 200-1. In addition, the processor 130 may receive location information indicating the location of the second user terminal 300-2 from the second user terminal 300-2 or the plurality of external devices 200-1, 200-2 via the communicator 110.

The memory 120 may store at least one instruction regarding the electronic device 100. In addition, the memory 120 may store an operating system (O/S) for operating the electronic device 100. The memory 120 may also store various software programs or applications for operating the electronic device 100 according to various embodiments of the present disclosure. The memory 120 may include a semiconductor memory 120 such as a flash memory 120, or magnetic storage media such as a hard disk, or the like.

Specifically, the memory 120 may store various software modules for operating the electronic device 100 according to various embodiments of the present disclosure, and the processor 130 may control the operation of the electronic device 100 by executing various software modules stored in the memory 120. In other words, the memory 120 may be accessed by the processor 130, and the data may be read/written/modified/deleted/updated, etc. by the processor 130.

Meanwhile, the term 'memory 120' in this disclosure may be used to include the memory 120, ROM or RAM in the processor 130, or a memory 120 card (e.g., micro SD card, memory stick) mounted in the electronic device 100.

In one or more embodiments, the memory 120 may store various information such as registration information for automated operations, registration requests from users, information indicating the occurrence of a preset event, status information for the first external device 200-1, location information for the first user, and the like. In addition, various other information necessary within the scope of accomplishing the purpose of the present disclosure may be stored in the memory 120, and the information stored in the memory 120 may be updated as it is received from an external device or input by the user.

The processor 130 controls the overall operations of the electronic device 100. Specifically, the processor 130 is connected to a configuration of the electronic device 100 that includes the communicator 110 and the memory 120, and may control the overall operations of the electronic device 100 by executing at least one instruction stored in the memory 120, as described above.

The processor 130 may be implemented in various ways. For example, the processor 130 may be implemented as at least one of Application Specific Integrated Circuit (ASIC), embedded processor 130, microprocessor 130, hardware control logic, hardware Finite State Machine (FSM), or Digital Signal Processor (DSP). Meanwhile, the term 'processor 130' in this disclosure may be used to include a Central Processing Unit (CPU), a Graphic Processing Unit (GPU), a Micro Processor Unit (MPU), and the like.

In one or more embodiments, the processor 130, based on the registration request from the first user, may register a preset event and an operation of the first external device 200-1 corresponding to the event and, when the preset event occurs, identify whether the second user is present in the space where the first external device 200-1 is located, when it is identified that the second user is present in the space where the first external device 200-1 is located, provide a message to request approval to control the operation of the first external device 200-1 to the second user, and when a response indicating approval to the request is received from the second user, control the communicator 110 to transmit a control signal corresponding to the operation to the first external device 200-1.

Various other embodiments based on control of the processor 130 have been described above with reference to FIGS. 1 to 9, and duplicative description of the same will be omitted.

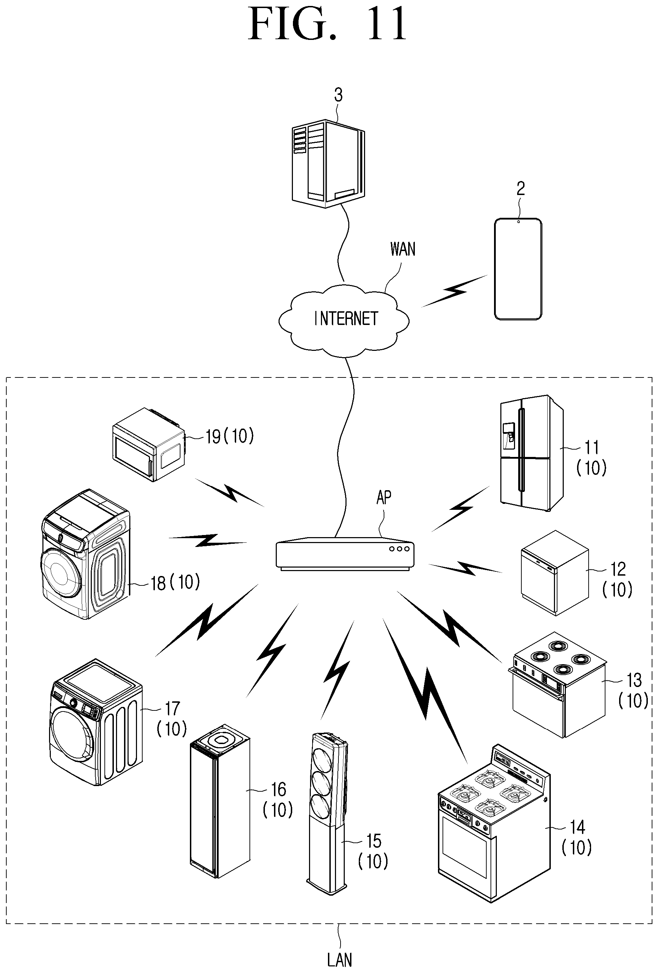

FIG. 11 is a view provided to explain a system according to one or more embodiments.

As illustrated in FIG. 11, another system according to one or more embodiments of the present disclosure may include a home appliance 10, a user device 2, and a server 3. Here, the home appliance 10 corresponds to the plurality of external devices 200-1, 200-2 described above, the user device 2 corresponds to the plurality of user terminals 300-1, 300-2 described above, and the server 3 corresponds to the electronic device 100.

In the following, in order to describe the electronic device 100, the plurality of external devices 200-1, 200-2, and the plurality of user terminals 300-1, 300-2 in greater detail, the devices included in the system according to the present disclosure will be specifically described with reference to the home appliance 10, the user device 2, and the server 3.

The home appliance 10 may include a communication module capable of performing communication with other home appliances, the user device 2, or the server 3, a user interface for receiving a user input or outputting information to the user, at least one processor for controlling the operation of the home appliance 10, and at least one memory in which programs for controlling the operation of the home appliance 10 are stored.

The home appliance 10 may be at least one of various types of home appliances. For example, the home appliance 10 may include at least one of, but not limited to, a refrigerator 11, a dishwasher 12, an electric range 13, an electric oven 14, an air conditioner 15, a clothes manager 16, a washing machine 17, a dryer 18, or a microwave oven 19, and may include various types of home appliances, for example, a robot cleaner, a vacuum cleaner, a television, and others not shown in the drawings. In addition, the aforementioned appliances are only examples, and in addition to the aforementioned appliances, a device connected to other home appliances, the user device 2 or the server 3 to perform the operations described below may be included in the home appliance 10 according to an embodiment.

In addition to the example illustrated in FIG. 11, another system according to one or more embodiments of the present disclosure may include a smart device (not shown) that operates using a smart hub (not shown) as a relay device. Here, the 'smart hub (not shown)' is a device for connecting and controlling smart devices (not shown), and may monitor and control the operation status of the smart devices (not shown) using various communication methods such as Wi-Fi, Zigbee, and Z-Wave. For example, the smart device (not shown) may include a smart light, a smart outlet, a security camera, a smart speaker, a thermostat, and the like, but is not limited to such example.

The server 3 may include a communication module capable of performing communication with other servers, the home appliance 10, or the user device 2, at least one processor capable of processing data received from the other servers, the home appliance 10, or the user device 2, and at least one memory capable of storing programs for processing data or processed data. Such a server 3 may be implemented as a variety of computing devices, such as a workstation, a cloud, a data drive, a data station, and the like. The server 3 may be implemented as one or more servers that are physically or logically separated based on function, detailed configuration of the function, or data, and may perform communication with each other to send/receive data and process the sent/received data.

The server 3 may perform functions such as managing user accounts, registering the home appliance 10 in association with the user accounts, managing or controlling the registered home appliance 10. For example, a user may connect to the server 3 via the user device 2 and create a user account. The user account may be identified by a username and password set by the user. The server 3 may register the home appliance 10 to the user account according to a predetermined procedure. For example, the server 3 may associate identification information of the home appliance 10 (e.g., serial number or MAC address, etc.) with the user account to register, manage, and control the home appliance 10.

The user device 2 may include a communication module capable of performing communication with the home appliance 10 or the server 3, a user interface for receiving a user input or outputting information to the user, at least one processor for controlling the operation of the user device 2, and at least one memory for storing programs for controlling the operation of the user device 2.

The user device 2 may be carried by the user, or placed in the user's home, office, or the like. The user device 2 may include, but is not limited to, a personal computer, a terminal, a portable telephone, a smart phone, a handheld device, a wearable device, and the like.

The memory of the user device 2 may store a program, i.e. an application, for controlling the home appliance 10. The application may be sold installed on the user device 2 or may be downloaded and installed from an external server.

By executing an application installed on the user device 2, the user can connect to the server 3 to create a user account, and perform communication with the server 3 based on the logged-in user account to register the home appliance 10.

For example, when the home appliance 10 is operated to allow the home appliance 10 to connect to the server 3 by following a procedure guided by the application installed on the user device 2, the server 3 may register the home appliance 10 with the user account by listing the identification information of the home appliance 10 (e.g., serial number or MAC address, etc.) in the corresponding user account.

The user may control the home appliance 10 using the application installed on the user device 2. For example, when the user logs into the user account with the application installed on the user device 2, the home appliance 10 registered in the user account appears, and when the user enters a control command for the home appliance 10, the control command can be delivered to the home appliance 10 through the server.

A network may include both wired and wireless networks. The wired network includes a cable network, a telephone network, etc., and the wireless network may include any network that transmits and receives signals through radio waves. The wired and wireless networks can be connected to each other.

The network may include a wide area network (WAN), such as the Internet, a local area network (LAN) formed around an access point (AP), and a near-field wireless network that does not go through an AP. The near-field wireless network may include, but is not limited to, Bluetooth^{™} (IEEE 802.15.1), Zigbee (IEEE 802.15.4), Wi-Fi Direct, Near Field Communication (NFC), Z-Wave, etc.

The access repeater (AP) may connect the home appliance 10 or the user device 2 to a wide area network (WAN) to which the server 3 is connected. The home appliance 10 or the user device 2 may be connected to the server 3 through the wide area network (WAN).

The access repeater (AP) may perform communication with the home appliance 10 or the user device 2 using wireless communications such as Wi-Fi^{™} (IEEE 802.11), Bluetooth^{™} (IEEE 802.15.1), Zigbee (IEEE 802.15.4), etc., and may connect to a wide area network (WAN) using wired communication, but is not limited thereto.

According to various embodiments, the home appliance 10 may be directly connected to the user device 2 or the server 3 without going through an access repeater (AP).

The home appliance 10 may be connected to the user device 2 or the server 3 through a far-field wireless network or a near-field wireless network.

For example, the home appliance 10 may be connected to the user device 2 through a near-field wireless network (e.g., Wi-Fi Direct).

In another example, the home appliance 10 may be connected to the user device 2 or the server 3 through a wide area network (WAN) using a far-field wireless network (e.g., a cellular communication module).

In another example, the home appliance 10 may be connected to a wide area network (WAN) using wired communication, and may be connected to the user device 2 or the server 3 through the wide area network (WAN).

In the case where the home appliance 10 may connect to the wide area network (WAN) using wired communication, it may also act as an access repeater. Accordingly, the home appliance 10 may connect other home appliances to the wide area network (WAN) to which the server 3 is connected. In addition, other home appliances may connect the home appliance 10 to the wide area network (WAN) to which the server 3 is connected.

The home appliance 10 may transmit information about its operation or state to another home appliance, the user device 2, or the server 3 through a network. For example, when a request is received from the server 3 or when a certain event occurs on the home appliance 10, the home appliance 10 may transmit information about its operation or state to another home appliance, the user device 2, or the server 3 or periodically or in real time. When information about the operation or state is received from the home appliance 10, the server 3 may update the stored information about the operation or state of the home appliance 10 and transmit the updated information about the operation and state of the home appliance 10 to the user device 2 through the network. Here, updating the information may include various operations in which the existing information is changed, such as adding new information to the existing information, replacing the existing information with new information, etc.

The home appliance 10 may obtain various information from other home appliances, the user device 2, or the server 3, and may provide the obtained information to the user. For example, the home appliance 10 may obtain from the server 3 information related to functions of the home appliance 10 (e.g., recipes, laundry instructions, etc.), information about various environments (e.g., weather, temperature, humidity, etc.), and output the obtained information through a user interface.

The home appliance 10 may operate in response to a control command received from other home appliances, the user device 2, or the server 3. For example, when the home appliance 10 has obtained prior authorization from the user to operate in response to a control command from the server 3 even without a user input, the home appliance 10 may operate in response to a control command received from the server 3. Here, the control command received from the server 3 may include, but is not limited to, control commands entered by the user through the user device 2 or control commands based on preset conditions.

The user device 2 may transmit information about the user to the home appliance 10 or the server 3 through a communication module. For example, the user device 2 may transmit information about the user's location, the user's health status, the user's preferences, the user's schedule, etc. to the server 3. The user device 2 may transmit information about the user to the server 3 based on the user's prior authorization.

The home appliance 10, the user device 2, or the server 3 may determine a control command using a technology such as artificial intelligence. For example, the server 3 may receive information about the operation or state of the home appliance 10 or information about the user of the user device 2, process the information using a technology such as artificial intelligence, and transmit the processing results or control commands to the home appliance 10 or the user device 2 based on the processing results.

Meanwhile, the controlling method of the electronic device according to the above-described embodiment may be implemented as a program and provided to the electronic device. In particular, the program including the controlling method of the electronic device may be stored and provided in a non-transitory computer readable medium.

Specifically, in a non-transitory computer-readable recording medium comprising a program executing a method of controlling an electronic device, the method of controlling the electronic device may include: registering, based on a registration request from a first user, a preset event and an operation of the first external device corresponding to the event; when the event occurs, identifying whether a second user is present in a space in which the first external device is located; if the second user is identified as being present in the space, providing a message to the second user to request approval to control the operation; and, when a response indicating approval to the request is received from the second user, transmitting a control signal corresponding to the operation to the first external device.

The machine-readable storage medium may be provided in the form of a non-transitory storage medium. Here, the 'non-temporary storage medium' only means that it is a tangible device and does not include signals (e.g., electromagnetic waves), and this term does not distinguish between a case in which data is stored semi-permanently in a storage medium and a case in which data is stored temporarily. For example, the 'non-temporary storage medium' may include a buffer in which data is temporarily stored.

According to one or more embodiments, the methods according to the various embodiments disclosed in this document may be included and provided in a computer program product. The computer program product may be traded as a product between a seller and a purchaser. The computer program product may be traded as a product between a seller and a purchaser. The computer program product can be distributed in the form of a storage medium that is readable by machines (e.g.: a compact disc read only memory (CD-ROM)), or distributed directly on-line (e.g.: download or upload) through an application store (e.g.: PlayStore^{TM}), or between two user devices (e.g.: smartphones). In the case of on-line distribution, at least a portion of a computer program product (e.g.: a downloadable app) may be stored in a storage medium readable by machines such as the server of the manufacturer, the server of the application store, or the memory of the relay server at least temporarily, or may be generated temporarily.

As described above, each of the components (e.g., modules or programs) according to the various embodiments may include a single entity or a plurality of entities, and some of the corresponding sub-components described above may be omitted or other sub-components may be further included in the various embodiments. Alternatively or additionally, some of the components (e.g., the modules or the programs) may be integrated into one entity, and may perform functions performed by the respective corresponding components before being integrated in the same or similar manner.

Operations performed by the modules, the programs or other components according to the various embodiments may be executed in a sequential manner, a parallel manner, an iterative manner or a heuristic manner, and at least some of the operations may be performed in a different order or be omitted, or other operations may be added.

Meanwhile, terms "~er/or" or "module" used in the disclosure may include units configured by hardware, software, or firmware, and may be used compatibly with terms such as, for example, logics, logic blocks, parts, circuits, or the like. The "~er/or" or "module" may be an integrally configured part or a minimum unit performing one or more functions or a part thereof. For example, the module may be configured by an application-specific integrated circuit (ASIC).

Various embodiments according to the present may be implemented in software including an instruction stored in a machine-readable storage medium (e.g., computer). A machine may be a device that invokes the stored instruction from the storage medium and is operated based on the invoked instruction, and may include an electronic apparatus (e.g., electronic device 100) according to embodiments disclosed herein.

In case that the instruction is executed by the processor, the processor may directly perform a function corresponding to the instruction or other components may perform the function corresponding to the instruction under control of the processor. The instruction may include codes provided or executed by a compiler or an interpreter.

Hereinabove, the embodiments of the disclosure have been described but the disclosure is not limited to the specific embodiment and may be variously modified by a person skilled in the art to which the disclosure pertains without departing from the gist of the disclosure as claimed herein, and such modifications should not be individually understood from technical concepts or prospects of the disclosure.

## Claims

1. An electronic device comprising:
a communicator; and
a processor configured to:
based on a registration request of a first user, register a preset event and an operation of a first external device corresponding to the registered preset event,
based on the registered preset event occurring, identify whether a second user is present in a space where the first external device is located,
based on identifying that the second user is present in the space, provide a request to the second user to approve the registered operation;
identify whether the registered operation is approved by the second user; and
based on the identifying whether the registered operation is approved by the second user, determine whether to transmit a control signal corresponding to the registered operation to the first external device.

2. The device as claimed in claim 1, wherein
the processor is configured to:
based on a response indicating an approval of the registered operation being received from the second user, or the response to the registered operation not being received from the second user for a preset threshold time, identify the approval of the registered operation by the second user, and
based on the approval of the registered operation being identified, determine to transmit the control signal corresponding to the registered operation to the first external device, and
control the communicator to transmit the control signal to the first external device.

3. The device as claimed in claim 1, wherein
the processor is configured to:
based on identifying that the second user is not present in the space, control the communicator to transmit the control signal corresponding to the registered operation to the first external device.

4. The device as claimed in claim 1, wherein
the processor is configured to:
receive status information indicating an operation status of the first external device from the first external device through the communicator,
identify whether the first external device is performing the registered operation based on the received status information,
based on identifying that the first external device is not performing the registered operation, identify whether the second user is present in the space where the first external device is located, and
based on identifying that the first external device is performing the registered operation, not identify whether the second user is present in the space where the first external device is located.

5. The device as claimed in claim 1, wherein
the processor is configured to:
receive the registration request from a first user terminal of the first user through the communicator, and
based on identifying that the second user is present in the space, control the communicator to transmit information about the request to approve the registered operation to at least one of a second user terminal of the second user or a second external device located in the space.

6. The device as claimed in claim 5, wherein
the processor is configured to:
receive location information indicating a location of the second user terminal from the second user terminal through the communicator, and
based on the received location information, identify whether the second user is present in the space.

7. The device as claimed in claim 6, wherein
the received location information includes information about whether the second user terminal is connected to at least one of an access point (AP) disposed in the space, the first external device, or the second external device; and
the processor is configured to:
based on identifying that the second user terminal is connected to at least one of the AP, the first external device, or the second external device, identify that the second user is present in the space.

8. The device as claimed in claim 6, wherein
the received location information includes at least one of Global Positioning System (GPS) information of the second user terminal, information about a distance between the second user terminal and the first external device, or information about a distance between the second user terminal and the second external device.

9. The device as claimed in claim 6, wherein
the processor is configured to:
receive the received location information from the second external device through the communicator; and
the location information is obtained based on at least one of image data obtained through a camera of the second external device or sensing data obtained through a sensor of the second external device.

10. The device as claimed in claim 4, wherein
the processor is configured to:
after the control signal corresponding to the registered operation is transmitted to the first external device, receive the status information indicating the operation status of the first external device from the first external device through the communicator,
identify whether the first external device is maintaining the registered operation based on the received status information, and
control the communicator to transmit information about whether the first external device is maintaining the registered operation to the first user terminal.

11. The device as claimed in claim 5, wherein
the processor is configured to:
based on the registration request being received from the first user terminal through the communicator, identify whether the received registration request overlaps with pre-registered control information, and
based on the received registration request overlapping with the pre-registered control information, control the communicator to transmit information indicating that the received registration request overlaps with the pre-registered control information to the first user terminal.

12. A method of controlling an electronic device including a communicator, the method comprising:
based on a registration request of a first user, registering a preset event and an operation of a first external device corresponding to the registered preset event;
based on the registered preset event occurring, identifying whether a second user is present in a space where the first external device is located;
based on identifying that the second user is present in the space, providing a request to the second user to approve the registered operation;
identifying whether the registered operation is approved by the second user; and
based on the identifying whether the registered operation is approved by the second user, determining whether to transmit a control signal corresponding to the registered operation to the first external device.

13. The method of claim 12, wherein
the identifying whether the registered operation is approved by the second user includes, based on a response indicating an approval of the registered operation being received from the second user, or the response indicating the approval of the registered operation not being received from the second user for a preset threshold time, identifying the approval of the registered operation by the second user,
the determining whether to transmit the control signal includes, based on the approval of the registered operation being identified, determining to transmit the control signal corresponding to the registered operation to the first external device; and
the method further comprises, transmitting the control signal corresponding to the registered operation to the first external device.

14. The method of claim 12, further comprising:
based on identifying that the second user is not present in the space, controlling the communicator to transmit the control signal corresponding to the registered operation to the first external device.

15. The method of claim 12, further comprising:
receiving status information indicating an operation status of the first external device from the first external device through the communicator;
identifying whether the first external device is performing the registered operation based on the received status information;
based on identifying that the first external device is not performing the registered operation, identifying whether the second user is present in the space where the first external device is located; and
based on identifying that the first external device is performing the registered operation, not identifying whether the second user is present in the space where the first external device is located.
